# EUROPEAN PATENT SPECIFICATION

(11) **EP 0 762 743 B1**
(45) Date of publication and mention of the grant of the patent: **17.10.2001**
(21) Application number: 96306038.9
(22) Date of filing: 19.08.1996
(51) Int. Cl.: H04N 5/238, H04N 5/235

(54) **Apparatus and method for controlling iris according to brightness variation of an input video signal**
Vorrichtung und Methode zur Regelung der Iris gemäss den Helligkeitsänderungen des Eingangsvideosignals
Dispositif et méthode pour le contrôle d'un iris en fonction de la variation de la luminance d'un signal vidéo d'entrée

(30) Priority: 23.08.1995 KR 9526202; 20.12.1995 KR 9552937
(43) Date of publication of application: 12.03.1997
(73) Proprietor: SAMSUNG ELECTRONICS CO., LTD., Suwon-City, Kyungki-do (KR)
(72) Inventor: Han, Dong-ju, Kwangmyong-city, Kyungki-do (KR)
(74) Representative: Chugg, David John

(56) References cited:
- GB-A- 2 251 352
- US-A- 4 780 766
- PATENT ABSTRACTS OF JAPAN vol. 095, no. 002, 31 March 1995 & JP 06 311422 A (FUJI PHOTO FILM CO LTD), 4 November 1994,

## Description

The present invention relates to an apparatus and a method for controlling an iris in a video camera. More particularly, this invention relates to an apparatus and a method for controlling an iris according to a brightness variation of an input signal.

An apparatus for controlling the iris which controls the aperture size of the iris according to the brightness variation of the input video signal in order to process a video signal having a proper brightness, is indispensable to a video camera.

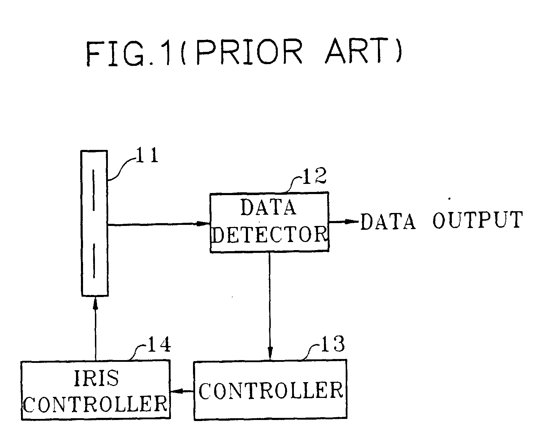

A conventional apparatus for controlling the iris uses a feedback method, and controls the aperture size of the iris in accordance with changing brightness of the input video signal, thereby achieving a video signal of a corrected brightness level. Conventional apparatus for controlling the iris is shown in Figure 1.

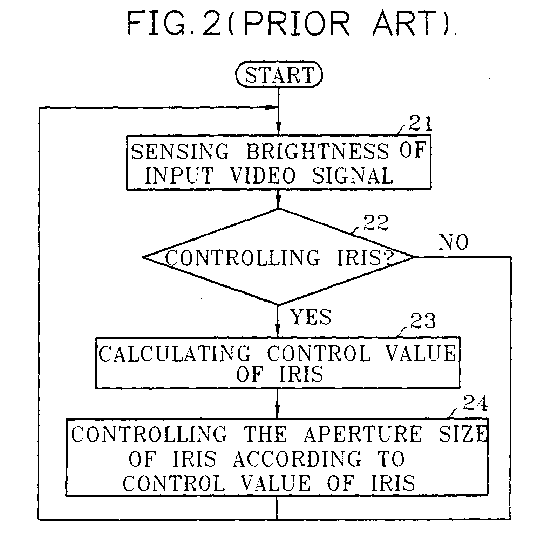

Figure 1 is a block diagram of a conventional apparatus for controlling the iris; and Figure 2 is a flow chart showing the operational steps of the conventional apparatus shown in Figure 1.

As shown in Figures 1 and 2, a data detector 12 senses a brightness of an input video signal input from an iris 11 (step 21). A controller 13 judges whether control of the iris 11 is needed (step 22). If control of the iris 11 is needed, the controller 13 calculates a control value, and outputs the control value to an iris controller 14 (step 23). The iris controller 14 controls the aperture size of the iris 11 by the control value from the controller 13 (step 24).

The above method for controlling the iris uses a feedback method. The above operations are repeated until an output video signal having a correct brightness level has been achieved.

If the input video signal varies in brightness, the control of the iris restarts according to the varied brightness. Therefore some time is needed to output a video signal having a proper brightness, and a video signal having an improper brightness is generated until the iris has been completely controlled.

GB 2251352 discloses an automatic gain control circuit for a video camera. In the circuit, the output video signal level is arranged to be maintained constant even when the gain control circuit is reacting to changes in incident light. In this respect, the lens of the camera focuses the incident light on an image sensor which converts the light into electrical signals, the level of which is controlled by an AGC circuit. The gain of the AGC circuit is controlled by an AGC detector responsive to the output of the AGC circuit. An iris driver is also responsive to the output level to adjust the iris of the lens. Control means are provided to detect the operation of the iris driver and to control or prevent adjustment of the gain of the AGC circuit dependent upon the operation of the iris driver.

It is an aim of embodiments of the present invention to provide an apparatus and a method for controlling an iris according to a brightness variation of an input video signal, which outputs a video signal having a correct brightness level while controlling the iris by a feedback method.

According to an aspect of the invention, there is provided a method for controlling an iris according to a brightness variation, comprising the steps of: sensing a brightness of an input video signal from an iris; judging whether a control of the iris is needed with reference to the brightness; and controlling the aperture of the iris, the method being characterised in that following the judging step, there is carried out the step of calculating and storing an amplification ratio for making the input video signal have a predetermined brightness level when control of the iris is needed, or storing the amplification ratio of 1 when control of the iris is not needed; there is then carried out the step of calculating a control value of the iris when the control of the iris is needed, the method being further characterised in that in the step of controlling the aperture size of the iris, this size is controlled according to the control value, and there is then carried out the step of amplifying the input video signal by the amplification ratio stored.

The method preferably further comprises the steps of: judging an increase in light quantity by comparing the brightness of the input video signal with a predetermined threshold value; and increasing a shutter speed when the light quantity abruptly increases as the brightness of the input video signal exceeds the predetermined threshold value.

The method may further comprise the step of: recovering the shutter speed to an original shutter speed after controlling the iris.

According to another aspect, there is provided an apparatus for controlling an iris according to a brightness variation, comprising: a data detector for sensing a brightness level of an input video signal through an iris; the apparatus being characterised by further comprising: a controller for judging whether control of the iris is needed, calculating an amplification ratio for making the input video signal have a predetermined brightness level when the control of the iris is needed, and calculating a control value of the iris; a buffer for storing the amplification ratio of the controller; an iris controller for controlling the iris by the control value of the iris; and a multiplier for multiplying the brightness of the input video signal by the amplification ratio stored in the buffer.

Said controller may apply the amplification of 1 to the buffer when there is no need for controlling the iris.

Said controller preferably determines the condition of an abrupt increase in light quantity when the brightness of the input signal is higher than a predetermined threshold value, and controls a shutter speed.

Preferably, said controller recovers the shutter speed to an original shutter speed after controlling the iris.

According to another aspect, there is provided an apparatus for controlling an iris, the apparatus including a data detector, and being characterised by a controller, for determining an appropriate amplification ratio when iris control is required, an iris controller using a feedback method and further including a buffer which stores an amplification ratio for making an input video signal have a predetermined brightness level when iris control is needed and stores the amplification ratio of 1 when iris control is not needed, and a multiplier which amplifies the input video signal by the amplification ratio stored in the buffer.

According to a further aspect of the invention, there is provided a method for controlling an iris, whereby the method is characterised by comprising the steps of: judging whether a control of the iris is needed; calculating an amplification ratio for making an input video signal have a predetermined brightness level and a control value of the iris, respectively, when a control of the iris is needed according to said judged result; controlling an aperture size of the iris by said calculated control value of the iris, and amplifying the input video signal by the amplification ratio while controlling the iris; and outputting the input video signal with an amplification ratio of 1 when iris control is not needed according to said judged result.

Preferably, distortion of the video signal is prevented or reduced by controlling a shutter speed when there is an abrupt increase in light quantity.

For a better understanding of the invention, and to show how embodiments of the same may be carried into effect, reference will now be made, by way of example, to the accompanying diagrammatic drawings, in which:
Figure 1 is a block diagram of a conventional apparatus for controlling an iris;
Figure 2 is a flow chart showing a conventional method for controlling the iris;
Figure 3 is a block diagram of an apparatus for controlling the iris in accordance with a preferred embodiment of the present invention;
Figure 4 is a flow chart showing the method for controlling the iris in the apparatus depicted in Figure 3;
Figure 5A to 5C show operating conditions of the iris and a charge coupled device (CCD) cell according to a variation of a intensity of light;
Figures 6A to 6C show an input video signal in the operating conditions depicted in Figure 5;
Figure 7 is a block diagram of an apparatus for controlling the iris in accordance with another preferred embodiment of the present invention; and
Figure 8 is a flow chart showing the method for controlling the iris in the apparatus depicted in Figure 7.

A detailed description of the present invention will now be made referring to the accompanying drawings.

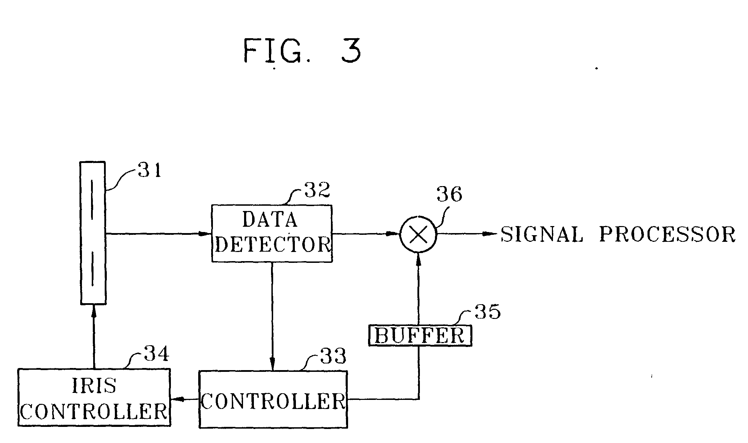

As shown in Figure 3, an iris 31, a data detector 32, and an iris controller 34 have the same or similar functions as their equivalents in Figure 1. The apparatus shown in Figure 3 further includes a buffer 35 which stores an amplification ratio for making an input video signal having a proper brightness level when control of the iris is needed and stores the amplification ratio of 1 when control of the iris is not needed, and a multiplier 36 which amplifies the input video signal by the amplification ratio stored in the buffer 35.

In addition, the controller 33 calculates a control value of the iris 31 when control of the iris is needed, and calculates the amplification ratio for making the input video signal have a proper brightness level, and outputs the amplification ratio to the buffer 35.

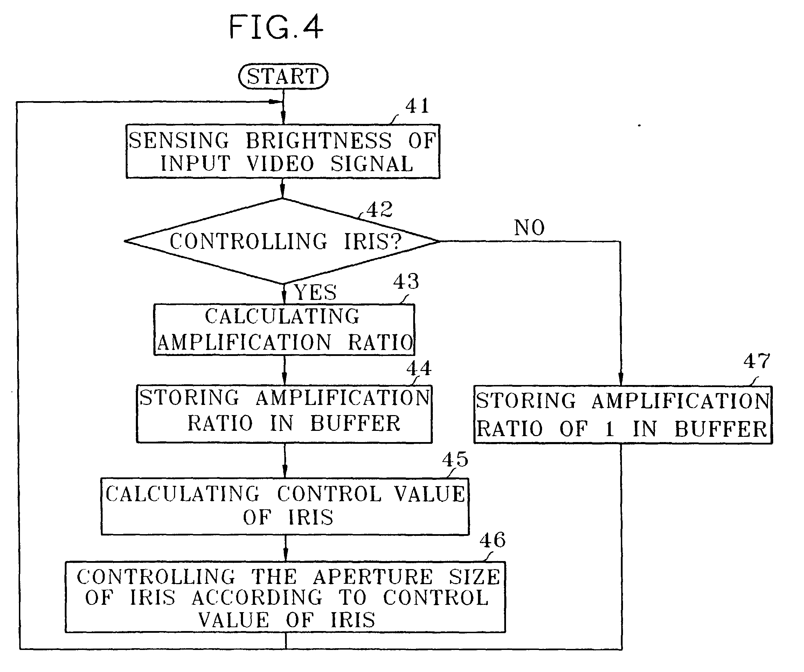

The operation of the aforementioned apparatus will be more specifically described with reference to Figure 4.

As shown in Figure 4, the data detector 32 senses a brightness of the input video signal from the iris 31, and outputs the brightness signal to the controller 33 (step 41). The controller 33 judges whether control of the iris is needed (step 42). The controller 33 calculates the amplification ratio for making the video signal have a proper brightness level when control of the iris is needed (step 43). The amplification ratio from the controller 33 is stored in the buffer 35 (step 44). The controller 33 calculates the control value of the iris when control of the iris is needed (step 45). The iris controller 34 controls the aperture size of the iris according to the control value calculated (step 46). After controlling the iris, the operation is fed back to step 41, so that the aforementioned steps are repeated.

When the controller 33 judges there is no need to control the iris because the input video signal has a proper brightness level (step 42), the amplification ratio of 1 is stored in the buffer 35 (step 47). After storing the amplification ratio in the buffer 35, the operation is fed back to step 41, so that the aforementioned steps are repeated.

The multiplier 36 amplifies the video signal from the data detector 32 by using the amplification ratio stored in the buffer 35. Therefore, the video signal amplified by the amplification ratio is generated while controlling the iris. The input video signal having the amplification ratio of 1 is output without a change when control of the iris is not needed.

According to the aforementioned method, when control of the iris is needed because of an improper brightness of the input video signal, the video signal is amplified simultaneously with controlling the iris by a feedback method, thereby generating a video signal having a proper brightness. When the input video signal already has the proper brightness (that is, when the input video signal essentially has a proper brightness or attains a proper brightness through a control of the iris), the input video signal is output without a change.

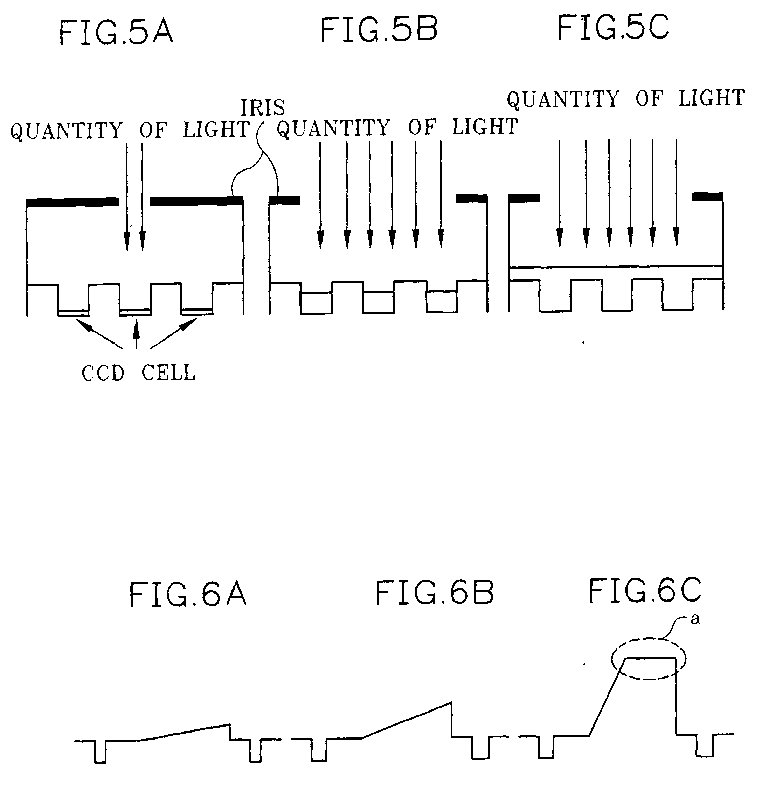

In the aforementioned apparatus for controlling the iris, when a camera user moves from a dark place having a small quantity of light to a light place having a large quantity of light, the iris is widely open while controlling the iris. Accordingly, since the wide-opened iris suddenly receives a large quantity of light, an overflow of quantity of light may occur in a charge coupled device (hereinafter referred to as a CCD) cell. A description about the overflow will be more specifically explained with reference to Figures 5A to 6C.

Figure 5A shows a state before a control of the iris when the user moves from a light place to a dark place. The iris is slightly open in the light place having large quantities of light. After moving from the light place to the dark place having the small quantity of light, the iris is still only slightly open before the control of the iris.

As a result, as shown in Figure 6A, the input video signal has a low brightness level. In this case, since the iris is controlled while the iris is slightly open, an overflow of the quantity of light does not occur in the CCD cell while controlling the iris.

Figure 5B shows a condition after the control of the iris when the user moves from the light place to the dark place. As shown in Figure 5B, the iris is widely open by controlling the iris, and attains more quantity of light. As a result, a magnitude of the brightness of the input video signal is controlled as shown in Figure 6B.

Figure 5C shows a condition before the control of the iris when the user moves from the dark place to the light place. Here, the iris is widely opened as it was in the dark place having the small quantity of light. After moving from the dark place to the light place, the iris is still widely open during the control of the iris. Accordingly, an overflow of the light quantity occurs at many photoelectric charges stored in the CCD cell, so that the input video signal is distorted as shown in Figure 6C.

Another preferred embodiment of the present invention detects the quantity of light, and shortens the storage time of the photoelectric charge stored in the CCD cell by increasing a shutter speed when the sensed quantity of light is larger than a threshold value of overflow of the CCD cell, and thus prevents overflow of the CCD cell during iris control.

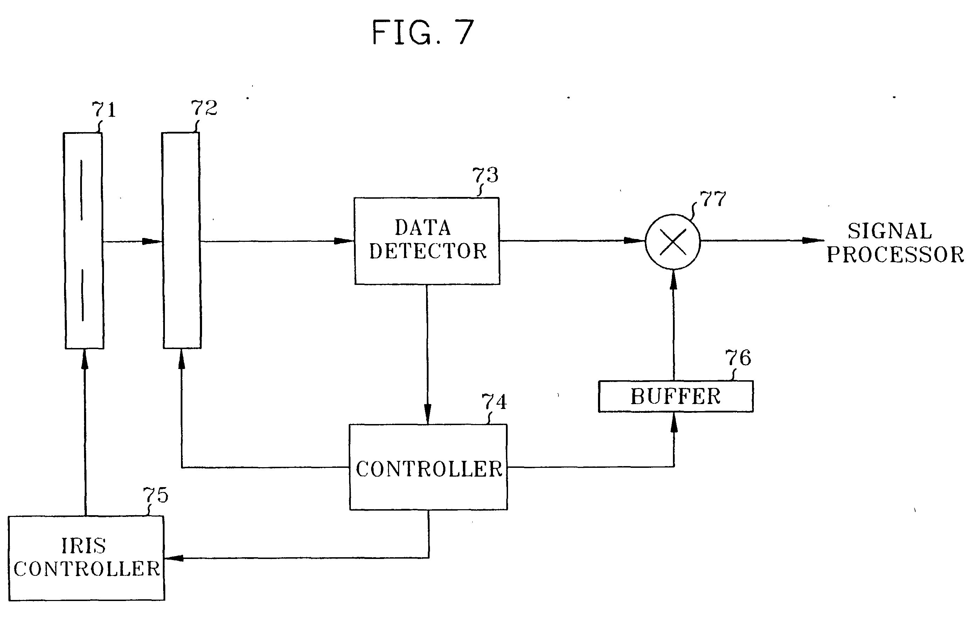

Figure 7 is a block diagram of the apparatus for controlling the iris in accordance with another preferred embodiment of the present invention. As shown in Figure 7, many elements of this preferred embodiment of the present invention are identical with those of Figure 3. However, a controller 74 further includes the steps of controlling a speed of a shutter 72.

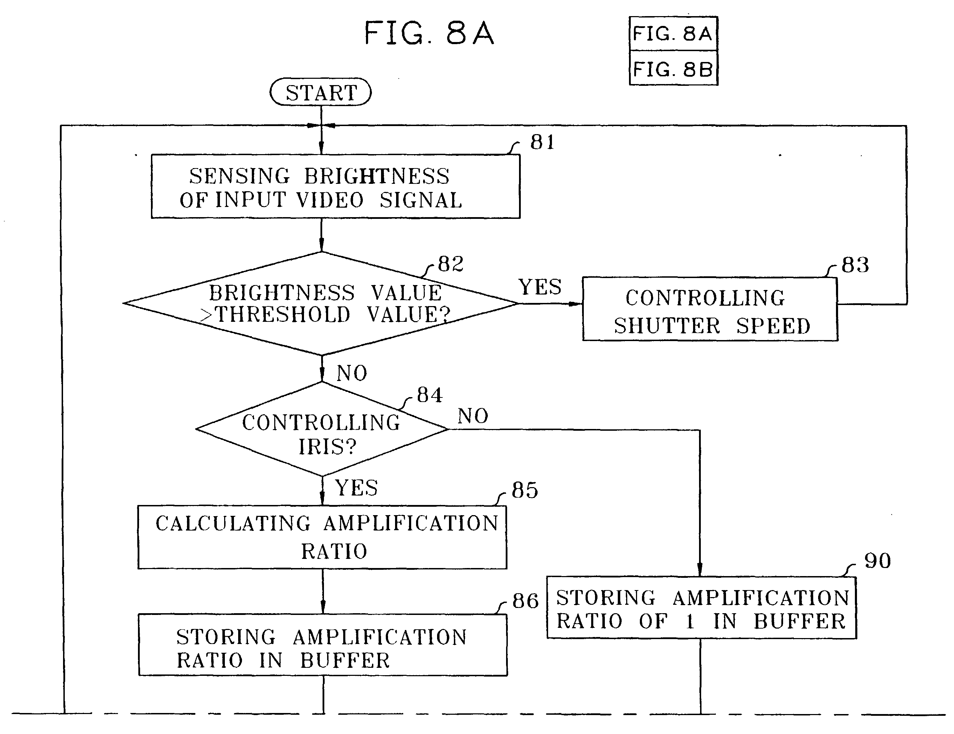

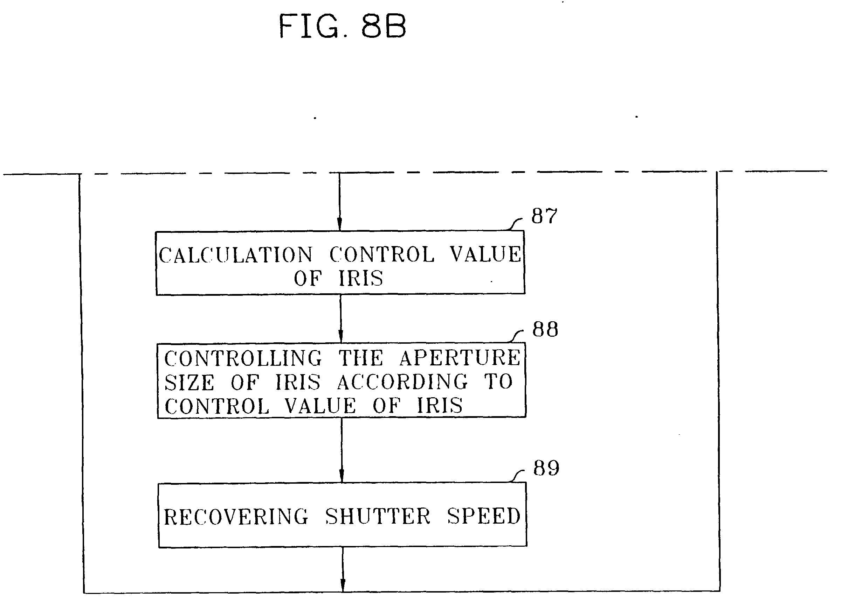

The operation of the apparatus shown in Figure 7 will be more specifically described with reference to Figure 8.

A data detector 73 senses a brightness of the input video signal from an iris 71, and outputs the brightness signal of the input video signal to the controller 74 (step 81).

The controller 74 compares the brightness signal with a predetermined threshold value, judges whether a value of the brightness is higher than the threshold value (step 82). In this case, the threshold value is a maximum value of a brightness signal wherein the overflow of the CCD cell does not occur. The controller 74 controls the shutter 72 by calculating the shutter speed when the brightness value is higher than the threshold value (step 83). That is, a storage time of the quantity of light stored in the CCD cell is shortened by increasing the shutter speed, so that the overflow of the quantity of light does not occur in the CCD cell.

The controller 74 judges the control of the iris when the brightness value is not beyond the threshold value (step 84), and calculates an amplification ratio for making a video signal have a proper brightness level when control of the iris is needed (step 85). A buffer 76 stores the amplification ratio (step 86). The controller 74 calculates a control value of the iris (step 87). The iris controller 75 controls the aperture size of the iris according to the control value of the iris (step 88). After the aperture size of the iris, a shutter speed is recovered by the controller 74 (step 89). After controlling the iris, the operation is fed back to step 81, so that the aforementioned steps are repeated.

When the controller 74 judges there is no need to control the iris because the input video signal has a proper brightness, the amplification ratio of 1 is stored in the buffer 76 (step 90). After storing the amplification ratio to the buffer 76, the operation is fed back to step 81, so that the aforementioned steps are repeated.

The multiplier 77 amplifies the input video signal by the amplification ratio stored in the buffer 76. Therefore, the video signal amplified by the amplification ratio is output while controlling the iris. The input video signal having the amplification ratio of 1 is output without a change when there is no need for controlling the iris.

As mentioned above, the apparatus and the method for controlling the iris according to embodiments of the invention output a video signal which has a proper brightness during control of the iris by a feedback method by using both the buffer and the multiplier. In addition, embodiments of the present invention prevent or reduce the distortion of the input video signal by controlling the shutter speed when the quantity of light is abruptly changed.

It is understood that various other modifications will be apparent to and can be readily made by those skilled in the art without departing from the scope of this invention.

Accordingly, it is not intended that the scope of the claims appended hereto be limited to the description as set forth herein, but rather that the claims be construed as encompassing all features of patentable novelty that reside in the present invention, including all features that would be treated as equivalents thereof by those skilled in the art to which this invention pertains.

While only certain embodiments of the invention have been specifically described herein, it will be apparent that numerous modifications may be made thereto without departing from the scope of the invention.

## Claims

1. A method for controlling an iris according to a brightness variation, comprising the steps of:
sensing (step 41, 81) a brightness of an input video signal from an iris (31,71);
judging (step 42, 84) whether a control of the iris (31,71) is needed with reference to the brightness; and
controlling the aperture of the iris,
the method being **characterised in that** following the judging step, there is carried out the step of calculating (step 43, 85) and storing (step 44, 86) an amplification ratio for making the input video signal have a predetermined brightness level when control of the iris (31, 71) is needed, or storing (step 47, 90) the amplification ratio of 1 when control of the iris is not needed; there is then carried out the step of calculating (step 45, 87) a control value of the iris (31, 71) when the control of the iris (31, 71) is needed, the method being further **characterised in that** in the step of controlling (step 46, 88) the aperture size of the iris, this size is controlled according to the control value, and there is then carried out the step of amplifying the input video signal by the amplification ratio stored.

2. The method according to claim 1, further comprising the steps of:
judging (step 82) an increase in light quantity by comparing the brightness of the input video signal with a predetermined threshold value; and
increasing (step 83) a shutter speed when the light quantity abruptly increases as the brightness of the input video signal exceeds the predetermined threshold value.

3. The method according to claim 2, further comprising the step of:
recovering (step 89) the shutter speed to an original shutter speed after controlling the iris (31, 71).

4. An apparatus for controlling an iris according to a brightness variation, comprising:
a data detector (32, 73) for sensing a brightness level of an input video signal through an iris (31, 71);
the apparatus being **characterised by** further comprising: a controller (33, 74) for judging whether control of the iris (31, 71) is needed, calculating an amplification ratio for making the input video signal have a predetermined brightness level when the control of the iris (31, 71) is needed, and calculating a control value of the iris (31, 71); a buffer (35, 76) for storing the amplification ratio of the controller (33, 74); an iris controller (34, 75) for controlling the iris (31, 71) by the control value of the iris (31, 71); and a multiplier (36, 77) for multiplying the brightness of the input video signal by the amplification ratio stored in the buffer (35, 76).

5. The apparatus according to claim 4, wherein said controller (33, 74) applies the amplification of 1 to the buffer (35, 76) when there is no need for controlling the iris (31, 71).

6. The apparatus according to claims 4 or 5, wherein said controller (74) determines the condition of an abrupt increase in light quantity when the brightness of the input signal is higher than a predetermined threshold value, and controls a shutter (72) speed.

7. The apparatus according to claim 6, wherein said controller (74) recovers the shutter (72) speed to an original shutter speed after controlling the iris (71).

8. Apparatus for controlling an iris, the apparatus including a data detector (32, 73), and being **characterised by** a controller (33, 74), for determining an appropriate amplification ratio when iris control is required, an iris controller (34, 75) using a feedback method and further including a buffer (35, 76) which stores an amplification ratio for making an input video signal have a predetermined brightness level when iris control is needed and stores the amplification ratio of 1 when iris control is not needed, and a multiplier (36, 77) which amplifies the input video signal by the amplification ratio stored in the buffer (35, 76).

9. A method for controlling an iris (31, 71), whereby the method being **characterised by** comprising the steps of:
judging whether a control of the iris is needed;
calculating an amplification ratio for making an input video signal have a predetermined brightness level and a control value of the iris, respectively, when a control of the iris (31, 71) is needed according to said judged result;
controlling an aperture size of the iris by said calculated control value of the iris, and amplifying the input video signal by the amplification ratio while controlling the iris (31, 71); and
outputting the input video signal with an amplification ratio of 1 when iris control is not needed according to said judged result.

10. Method according to claim 9 or apparatus according to claim 8, wherein distortion of the video signal is prevented or reduced by controlling (step 83) a shutter (72) speed when there is an abrupt increase in light quantity (step 82).

## Patentansprüche

1. Verfahren zum Steuern einer Blende entsprechend einer Helligkeitsänderung, welches die Arbeitsschritte aufweist:
Messen (Arbeitsschritt 41, 81) der Helligkeit eines videoeingangssignals einer Blende (31, 71);
Beurteilen (Arbeitsschritt 42, 84), ob eine Steuerung der Blende (31, 71) bezüglich der Helligkeit notwendig ist; und
Steuern der Apertur der Blende,
wobei das Verfahren, **dadurch gekennzeichnet ist, dass**
nachfolgend zum Arbeitsschritt des Beurceilens der Arbeitsschritt des Berechnens (Arbeitsschritt 43, 85) ausgeführt wird und der des Speicherns (Arbeitsschritt 44, 86) eines Verstärkungsverhältnisses, um das Videoeingangssignal auf einen vorbestimmten Helligkeitspegel zu bringen, wenn die Steuerung der Blende (31, 71) notwendig ist, oder um das Verstärkungsverhältnis von 1 (Arbeitsschritt 47, 90) zu speichern, wenn die Steuerung der Blende nicht notwendig ist; es wird dann der Arbeitsschritt des Berechnens (Arbeitsschritt 45, 87) eines Steuerwertes der Blende (31, 71) ausgeführt, wenn die Steuerung der Blende (31, 71) notwendig ist, wobei das Verfahren ferner **dadurch gekennzeichnet ist, dass** in dem Arbeitsschritt des Steuerns (Arbeitsschritt 46, 88) der Größe der Apertur der Blende die Größe entsprechend dem Steuerwert gesteuert wird und dann der Arbeitsschritt des Verstärkens des Videoeingangssignals um das Verstärkungsverhältnis, welches gespeichert ist, ausgeführt wird.

2. Verfahren nach Anspruch 1, welches ferner die Arbeitsschritte aufweist:
Beurteilen (Arbeitsschritt 82) eines Ansteigens der Lichtmenge indem die Helligkeit des Videoeingangs des Signals mit einem vorbestimmten Schwellwert verglichen wird und Erhöhen (Arbeitsschritt 83) einer Verschlussgeschwindigkeit, wenn die Lichtmenge abrupt ansteigt, wenn die Helligkeit des Videoeingangssignals den vorbestimmten Schwellwert überschreitet.

3. Verfahren nach Anspruch 2, welches ferner den Arbeitschritt aufweist:
Wiederherstellen (Arbeitsschritt 89) der Verschlussgeschwindigkeit auf die ursprüngliche Verschlussgeschwindigkeit nach Steuerung der Blende (31, 71).

4. Gerät zum Steuern einer Blende entsprechend einer Helligkeitsänderung, welches aufweist:
einen Datendetektor (32, 73) zum Messen bzw. Erfassen eines Helligkeitspegels eines Videoeingangssignals über eine Blende (31, 71) ;
wobei das Gerät ferner **dadurch gekennzeichnet ist, dass** es aufweist:
ein Steuergerät (33, 74) zum Beurteilen, ob die Steuerung der Blende (31, 71) notwendig ist, Berechnen eines Verstärkungsverhältnisses, um das Videoeingangssignal auf einen vorbestimmten Helligkeitspegel zu bringen, wenn die Steuerung der Blende (31, 71) notwendig ist, und Berechnen eines Steuerwertes der Blende (31, 71); einen Puffer (35, 76) zum Speichern des Verstärkungsverhältnisses des Steuergeräts (33, 74); ein Blenden-Steuergerät (34, 75) zum Steuern der Blende (31, 71) über einen Steuerwert der Blende (31, 71); und einen Multiplier (36, 77) zum Multiplizieren der Helligkeit des Videoeingangssignals mit dem Verstärkungsverhältnis, welches in dem Puffer (35, 76) gespeichert ist.

5. Gerät nach Anspruch 4, in welchem das Steuergerät (33, 74) die Verstärkung von 1 dem Puffer (35, 76) zuführt, wenn keine Notwendigkeit zum Steuern der Blende (31, 71) gegeben ist.

6. Gerät nach Anspruch 4 oder 5, in welchem das Steuergerät (74) den Zustand eines abrupten Anstiegs der Lichtmenge bestimmt, wenn die Helligkeit des Eingangssignals höher als ein vorbestimmter Schwellwert ist und eine Verschluss- (72) Geschwindigkeit steuert.

7. Gerät nach Anspruch 6, in welchem das Steuergerät (74) die Verschluss-(72)Geschwindigkeit auf eine ursprüngliche Verschlussgeschwindigkeit nach dem Steuern der Blende (71) zurücksetzt.

8. Gerät zum Steuern einer Blende, wobei das Gerät einen Daten-Detektor (32, 73) beinhaltet und durch ein Steuergerät (33, 74) **gekennzeichnet** ist, um ein geeignetes Verstärkungsverhältnis zu bestimmen, wenn eine Blendensteuerung erforderlich ist, mit einem Blendensteuergerät (34, 75) welches ein Rückkopplungsverfahren nutzt und ferner mit einem Puffer (35, 76), welcher ein Verstärkungsverhältnis speichert, um ein Videoeingangssignal auf einen vorbestimmten Helligkeitspegel zu bringen, wenn eine Blendensteuerung notwendig ist und das Verstärkungsverhältnis von 1 speichert, wenn eine Blendensteuerung nicht notwendig ist, und einen Multiplier (36, 77), welcher das Videoeingangssignal um das Verstärkungsverhältnis verstärkt, welches in dem Puffer (35, 76) gespeichert ist.

9. Verfahren zum Steuern einer Blende (31, 71), wobei das Verfahren **dadurch gekennzeichnet ist, dass** es die Arbeitsschritte umfasst:
Beurteilen, ob eine Steuerung der Blende notwendig ist;
Berechnen eines Verstärkungsverhältnisses, um ein Videoeingangssignal auf einen vorbestimmten Helligkeitspegel und einen jeweiligen Steuerwert der Blende zu bringen, wenn eine Steuerung der Blende (31, 71) entsprechend dem beurteilten Ergebnis notwendig ist;
Steuern der Größe einer Apertur der Blende durch den berechneten Steuerwert der Blende und Verstärken des Videoeingangssignals um das Verstärkungsverhältnis während des Steuerns der Blende (31, 71); und
Ausgeben des Videoeingangssignals mit einem Verstärkungsverhältnis von 1, wenn eine Steuerung der Blende entsprechend dem beurteilten Ergebnis nicht notwendig ist.

10. Verfahren nach Anspruch 9 oder Gerät nach Anspruch 8, in welchem eine Verzerrung des Videosignals verhindert oder reduziert wird, indem eine Verschluss-(72) Geschwindigkeit gesteuert wird, wenn es eine abrupte Zunahme der Lichtmenge gibt (Arbeitsschritt 82).

## Revendications

1. Procédé pour commander un iris en fonction d'une variation de luminosité, comportant les étapes consistant à :
détecter (étape 41, 81) une luminosité d'un signal vidéo d'entrée provenant d'un iris (31, 71),
juger (étape 42, 84) si une commande de l'iris (31, 71) est nécessaire en référence à la luminosité, et
commander l'ouverture de l'iris,
le procédé étant **caractérisé en ce qu'**après l'étape de jugement, on effectue l'étape de calcul (étape 43, 85) et de mémorisation (étape 44, 86) d'un rapport d'amplification pour amener le signal vidéo d'entrée à avoir un niveau de luminosité prédéterminé lorsqu'une commande de l'iris (31, 71) est nécessaire, ou de mémorisation (étape 47, 90) du rapport d'amplification de 1 lorsque la commande de l'iris n'est pas nécessaire, on effectue alors l'étape de calcul (étape 45, 87) d'une valeur de commande de l'iris (31, 71) lorsque la commande de l'iris (31, 71) est nécessaire, le procédé étant **caractérisé de plus en ce que** lors de l'étape de commande (étape 46, 88) de la dimension d'ouverture de l'iris, cette dimension est commandée conformément à la valeur de commande, et on effectue alors l'étape d'amplification du signal vidéo d'entrée par le rapport d'amplification mémorisé.

2. Procédé selon la revendication 1, comportant de plus les étapes consistant à :
juger (étape 82) une augmentation de quantité lumineuse en comparant la luminosité du signal vidéo d'entrée à une valeur de seuil prédéterminée, et
augmenter (étape 83) une vitesse d'obturateur lorsque la quantité lumineuse augmente brusquement du fait que la luminosité du signal vidéo d'entrée dépasse la valeur de seuil prédéterminée.

3. Procédé selon la revendication 2, comportant de plus l'étape consistant à :
rétablir (étape 89) la vitesse d'obturateur à une vitesse d'obturateur d'origine après commande de l'iris (31, 71).

4. Dispositif pour commander un iris en fonction d'une variation de luminosité, comportant :
un détecteur de données (32, 73) pour détecter un niveau de luminosité d'un signal vidéo d'entrée à travers un iris (31, 71),
le dispositif étant **caractérisé en ce qu'**il comporte de plus : un contrôleur (33, 74) pour juger si une commande de l'iris (31, 71) est nécessaire, calculer un rapport d'amplification pour amener le signal vidéo d'entrée à avoir un niveau de luminosité prédéterminé lorsque la commande de l'iris (31, 71) est nécessaire, et calculer une valeur de commande de l'iris (31, 71), une mémoire tampon (35, 76) pour mémoriser le rapport d'amplification du contrôleur (33, 74), un contrôleur d'iris (34, 75) pour commander l'iris (31, 71) par la valeur de commande de l'iris (31, 71), et un multiplicateur (36, 77) pour multiplier la luminosité du signal vidéo d'entrée par le rapport d'amplification mémorisé dans la mémoire tampon (35, 76).

5. Dispositif selon la revendication 4, dans lequel ledit contrôleur (33, 74) applique l'amplification de 1 à la mémoire tampon (35, 76) lorsqu'il n'y a aucun besoin de commander l'iris (31, 71).

6. Dispositif selon la revendication 4 ou 5, dans lequel ledit contrôleur (74) détermine la condition d'une augmentation brusque de quantité lumineuse lorsque la luminosité du signal d'entrée est supérieure à une valeur de seuil prédéterminée, et commande une vitesse d'obturateur (72).

7. Dispositif selon la revendication 6, dans lequel ledit contrôleur (74) rétablit la vitesse d'obturateur (72) à une vitesse d'obturateur d'origine après commande de l'iris (71).

8. Dispositif pour commander un iris, le dispositif comportant un détecteur de données (32, 73), et est **caractérisé par** un contrôleur (33, 74) pour déterminer un rapport d'amplification approprié lorsque la commande d'iris est nécessaire, un contrôleur d'iris (34, 75) utilisant un procédé de rétroaction et comportant de plus une mémoire tampon (35, 76) qui mémorise un rapport d'amplification pour amener un signal vidéo d'entrée à avoir un niveau de luminosité prédéterminé lorsqu'une commande d'iris est nécessaire et mémorise le rapport d'amplification de 1 lorsque la commande d'iris n'est pas nécessaire, et un multiplicateur (36, 77) qui amplifie le signal vidéo d'entrée par le rapport d'amplification mémorisé dans la mémoire tampon (35, 76).

9. Procédé pour commander un iris (31, 71), de sorte que le procédé est **caractérisé en ce qu'**il comporte les étapes consistant à :
juger si une commande de l'iris est nécessaire,
calculer un rapport d'amplification pour amener un signal vidéo d'entrée à avoir un niveau de luminosité prédéterminé et une valeur de commande de l'iris, respectivement, lorsqu'une commande de l'iris (31, 71) est nécessaire conformément audit résultat jugé,
commander une dimension d'ouverture de l'iris par ladite valeur de commande calculée de l'iris, et amplifier le signal vidéo d'entrée par le rapport d'amplification tout en commandant l'iris (31, 71), et
émettre le signal vidéo d'entrée avec un rapport d'amplification de 1 lorsque la commande d'iris n'est pas nécessaire conformément audit résultat jugé.

10. Procédé selon la revendication 9 ou dispositif selon la revendication 8, dans lequel une distorsion du signal vidéo est empêchée ou réduite en commandant (étape 83) une vitesse d'obturateur (72) lorsqu'il y a une augmentation brusque de quantité lumineuse (étape 82).
